# EUROPÄISCHE PATENTSCHRIFT

(11) **EP 2 130 800 B1**
(45) Veröffentlichungstag und Bekanntmachung des Hinweises auf die Patenterteilung: **10.07.2013**
(21) Anmeldenummer: 09160969.3
(22) Anmeldetag: 25.05.2009
(51) Int. Cl.: C02F 1/42, C02F 1/52, C02F 1/66

(54) **Verfahren zur Aufbereitung von alkalischen Spülwässern**
Method for treating alkaline rinse water
Procédé de préparation d'eaux de lavage alcalines

(30) Priorität: 04.06.2008 DE 102008026745
(43) Veröffentlichungstag der Anmeldung: 09.12.2009
(73) Patentinhaber: kolb Cleaning Technology GmbH, 47877 Willich (DE)
(72) Erfinder: Pollmann, Georg, 47877 Willich (DE); Linker, Christian, 42549 Velbert (DE)
(74) Vertreter: von Kreisler Selting Werner

(56) Entgegenhaltungen:
- GB-A- 1 571 847
- JP-A- 52 133 835
- JP-A- 59 098 795
- US-A- 5 259 960
- US-A- 5 310 486
- US-B1- 6 203 705

## Beschreibung

Hintergrund der Erfindung ist ein Verfahren zur Aufbereitung von alkalischen Spülwässern aus der Leiterplattenherstellung, Leiterplattenfertigung und/oder Bestückung mit hohen Gehalten an gelösten und/oder ungelösten Zinn.

Aus "Wasser, Luft und Boden" 11-12/1999, Seiten 36 bis 37 sind Ionenaustauscher auf Naturstoffbasis bekannt, die Schwermetalle aus Abwässern entfernen. Zur Elimination von Schwermetallen in geringen Konzentrationen aus Wasser und Abwasser lässt sich danach ein Ionenaustauscher beispielsweise auf Naturstoffbasis mit fasriger Grundstruktur einsetzen. Er verfügt, abweichend von den bisher für diesen Zweck eingesetzten selektiven Austauschern, über ein Polymergerüst (Matrix) aus Zellulose und einer neuartigen Kombination von fixierenden Gruppen. Vorgestellt in diesem Artikel werden verschiedene Anwendungen. So setzt man das Material beispielsweise als Filtersubstanz für "Polizeifilter" zur Entfernung von Blei- und Zinkresten aus dem Abwasser einer Bildröhrenfabrik ein. Aus diesem Artikel ist weiterhin bekannt, dass wegen der Umwelt- und Gesundheitsgefährdung durch die meisten Schwermetalle strenge Abwasserauflagen eingeführt wurden, deren Einhaltung oft nur mit einem hohen Aufwand gesichert werden kann.

In der Praxis hat sich gegenwärtig die Fällung dieser Schwermetalle durch Kalk durchgesetzt, da ohnehin meist ein Abstumpfen von Säureresten mit einem Neutralisationsmittel erforderlich ist. Beide Vorgänge können gleichzeitig ablaufen. Fällungsreaktionen haben jedoch häufig den Nachteil, dass bei einigen Metallen wegen begrenzter Löslichkeit oder schlechter Abtrennbarkeit der Niederschläge keine ausreichende Reinigung bewirkt wird. Eine vollständige Entfernung von Stoffen kann bei absorptiven Vorgängen erreicht werden, sofern eine Anreicherung an Absorbern erfolgt und ein geeignetes Filterbett durchströmt wird.

Bei alkalischen Reinigungssystemen entsteht unter anderem Abwasser aus dem Spülwasserkreislauf. Dieses Spülwasser ist kontaminiert mit Schwermetallen, beispielsweise Blei, Zinn, Silber oder Kupfer. Diese Schwermetalle werden aus einem vorgeschalteten Reinigungskreislauf von dem Reinigungsgut abgetrennt und gehen in Form von Hydroxiden oder sonstigen Salzen im Reinigungskreislauf in Lösung. Prozessbedingt wird ein Teil von dem kontaminierten Reinigungsgemisch in die nachgeschalteten Spülwasserkreise eingetragen.

Um diese Spülwässer in das öffentliche Kanalnetz einleiten zu dürfen, müssen entsprechende Grenzwerte eingehalten werden. Diese sehen beispielsweise für die Bundesrepublik Deutschland max. 2 mg/l Zinn vor.

Im Stand der Technik wurde bereits vorgeschlagen die Aufbreitung von Spülwässern mit überschrittenen Grenzwerten beispielsweise Metall-Ionenaustauscher sowie ergänzenden mechanischen Feinfiltern durchzuführen, sodass nach dieser Filtration/Aufbereitung die Grenzwerte unterschritten werden und die indirekte Einleitung erfolgen kann. Die vorhandenen Zinn-Schwermetalle im Spülwasser liegen dabei in Form von gelösten Oxokomplexen bzw. Hydroxykomplexen vor, die bei bekannten Ionenaustauschern nur zu einer kurzen Standzeit führen.

Ein Verfahren zur Aufbereitung von Spülwassern aus der Leiterplattenfertigung mit hoher Gehalten an Zinn wird beispielweise im Dokument JP 521 33 835 beschrieben.

Dies bedeutet aktuell für den Markt sehr hohe Kosten für das Wechseln und Regenerieren der aktuell besten Ionenaustauscher.

Dementsprechend besteht die Aufgabe der vorliegenden Erfindung in der Bereitstellung eines kosteneffizienten Verfahrens zur Aufbereitung von alkalischen Spülwässern aus der Leiterplattenherstellung, Leiterplattenfertigung und/oder Bestückung mit hohen Gehalten an gelösten und/oder ungelösten Zinn.

In der vorliegenden Erfindung wird diese gelöst durch ein Verfahren zur Aufbereitung von alkalischen Spülwässern **aus der Leiterplattenherstellung, Leiterplattenfertigung und/oder der Bestückung** mit hohen Gehalten an gelöstem und/oder ungelöste**m** Zinn, das dadurch gekennzeichnet ist, dass man die Spülwässer
(a) in einem ersten Schritt auf einen pH-Wert im Bereich von 4,5 bis 6,5 zur Fällung eines Zinnhydroxids **durch Zugabe einer anorganischen nicht oxidierenden Säure** einstellt,
(b) **den** gemäß Schritt (a) **erhaltenen Zinnhydroxid-Niederschlag koagulieren lässt,**
(c) **das gemäß Schritt (b) gefällte Zinnhydroxid** mit einer me**chanischen Filterkaskade abtrennt und**
(d) das Filtrat einem Ionenaustauschverfahren **mit einem Ionenaustausch mit einer Cellulosematrix und fixierenden Gruppen** zur Eliminierung des Gesamtgehalts an Zinn von bis zu 2 mg/l unterzieht.

Mit Hilfe der vorliegenden Erfindung ist es möglich, alkalische Spülwässer aus **der Leiterplattenherstellung, Leiterplattenfertigung und/oder Bestückung** kosteneffizient aufzubereiten, wobei gleichzeitig auch die strengen Abwasserauflagen erfüllt werden können. So ist es mit Hilfe des erfindungsgemäßen Verfahrens möglich, den Gesamtgehalt an Zinn unterhalb der vorgeschriebenen Grenze von 2 mg/l zu drücken. Mit Hilfe der vorliegenden Erfindung werden darüber hinaus auch die Gehalte an weiteren Schwermetallen in dem Bereich der zulässigen Mengen reduziert.

In einem ersten Schritt werden die mehr oder weniger stark alkalischen Spülwässer, die neben Zinn gegebenenfalls auch weitere gelöste und/oder ungelöste Schwermetalle enthalten auf einen pH-Wert in einem Bereich von 4,5 bis 6,5 angesäuert. Die in Form von Oxo- und Hydroxokomplexen gelösten Zinnionen werden dabei als Zinnhydroxid ausgefällt. Gegebenenfalls ist es sinnvoll, an sich bekannte Flockungshilfsmittel bzw. Koaglutationshilfsmittel einzusetzen, um einen großvolumigen Niederschlag zu erzielen. Diese insbesondere zinnhydroxidenthaltenden Niederschläge werden dann mit einem handelsüblichen Filtersystem abgetrennt. **Dabei wird** eine mechanische Filterkaskade eingesetzt, die aus drei oder mehreren Filtereinheiten besteht. So haben sich Filtereinheiten mit absteigender Porengröße von 5 µm, 1 µm bis 0,2 µm als besonders vorteilhaft herausgestellt. Das so filtrierte Spülwasser wird dann einem an sich bekannten Ionenaustauschverfahren zur Eliminierung des Gesamtgehalts an Zinn von bis zu 2 mg/l unterzogen. Hierbei wird auch die Belastung an anderen Schwermetallen entsprechend den gesetzlichen Anforderungen reduziert. Als Ionenaustauscher werden hier die aus dem Stand der Technik bereits bekannten Ionenaustauscher mit einer Zellulosematrix und fixierenden Gruppen eingesetzt wie sie in der Einleitung beschrieben sind.

Das erfindungsgemäße Verfahren ist somit überhaupt ein attraktives und technisch reproduzierbares Aufbereitungsverfahren von zinnhaltigem Spülwasser durch Ionenaustauscher.

Die Herkunft der Spülwässer aus der Metallbearbeitung ist insofern von Interesse, wenn diese entsprechend hohe Gehalte an Schwermetallen aufweisen. So fällt insbesondere Spülwasser aus der Leiterplattenherstellung, Leiterplattenfertigung und/oder Bestückung.

Insbesondere hohe Zinngehalte ergeben sich in der Carrier, Leiterplattenfertigung, bei der Reinigung von Masken, Misprints, Baugruppen, Lötrahmen, Maschinenteilen, Kisten, Magazinen und Horden. Eine der Hauptquellen für die erhöhte Zinnbelastung liegt in der Verarbeitung von Lötzinn, das heute üblicherweise als bleifreies Lot eingesetzt wird. Dementsprechend ist dem Gehalt an Zinn besondere Aufmerksamkeit zu widmen.

Der pH-Wert der alkalischen Spülwässer **wird** durch Zugabe einer anorganischen, nichtoxidierenden Säure eingestellt werden. Organische Säuren, wie Ameisensäure, Essigsäure oder Zitronensäure sind zwar prinzipiell in gleicher Weise zur Einstellung des pH-Werts geeignet, jedoch ist hier zum Teil eine Komplexierung der Schwermetallionen insbesondere der Zinnionen bei mehrbasigen Säuren zu befürchten. Darüber hinaus wird durch Zugabe von organischen Säuren die Gesamtbelastung an organischen Bestandteilen erhöht. Der Einsatz oxidierender Säuren führt dazu, dass gelöstes Zn²⁺ zu Zn⁴⁺ oxidiert wird, das jedoch eine bessere Löslichkeit als Zn²⁺ hat. Besonders bevorzugt im Sinne der vorliegenden Erfindung wird Phosphorsäure als anorganische nichtoxidierende Säuren eingesetzt. Beim Einsatz von Salzsäure ist zu bedenken, dass hierüber die Chlorbelastung des Abwassers in negativer Weise erhöht wird.

Besonders bevorzugt im Sinne der vorliegenden Erfindung wird der pH-Wert im ersten Schritt des erfindungsgemäßen Verfahrens auf einen Wert im Bereich von 5,0 bis 6,0 eingestellt, da innerhalb dieses Bereiches die Löslichkeit des Zinnhydroxids am geringsten ist.

Im Anschluss an den Zusatz eines pH-Senkers zu den alkalischen Spülwässern lässt man den erhaltenden Zinnhydroxid-Niederschlag koagulieren. Dies geschieht beispielsweise dadurch, dass man den Niederschlag eine gewisse Zeit ruhen lässt oder beispielsweise auch durch den Zusatz von Koagulationshilfsmitteln. Besonders bevorzugt im Sinne der vorliegenden Erfindung führt man die Koagulation im Verlauf von bis zu 2h insbesondere im Verlauf von bis zu 15 Min durch. Besonders bevorzugt im Sinne der vorliegenden Erfindung ist diese bei Raumtemperatur durchzuführen. Gegebenenfalls ist es jedoch auch möglich, die den Niederschlag aufweisende Dispersion zu kühlen oder auch zu erwärmen.

Das gefällte Zinnhydroxid wird in dem Verfahrensschritt (**c**) mit einem Filter abgetrennt, wobei man eine mechanische Filterkaskade einsetzt. Entsprechende Filterkaskaden mit mehreren Stufen im Mikrometerbereich sind im Handel erhältlich.

Im letzten Verfahrensschritt werden dann die aufzubereitenden alkalischen Spülwässer nach der Abtrennung des Zinnhydroxid -Niederschlages auf eine Ionenaustauschersäule gegeben, die geeignet ist, gelöste Schwermetalle, insbesondere Zinn zu binden. Diese Ionenaustauscher enthalten bekanntermaßen chelatiesierende, gegebenenfalls selektive Harze, die auf die Entfernung von Schwermetallen, insbesondere Zinn bei kleinen Konzentrationen spezialisiert sind. **In** der vorliegenden Erfindung werden Ionenaustauschersäulen auf der Basis von Cellulose mit fixierenden Gruppen eingesetzt.

Das vorgenannte Verfahren kann insbesondere in Reinigungssystemen der Metallbearbeitung und Metallverarbeitung, beispielsweise für Elektronikproduzenten in vollautomatischen Systemen eingesetzt werden.

Der Funktionsablauf kann beispielsweise wie folgt dargestellt werden:
Über einen Zulaufkugelhahn werden die alkalischen Spülwässer von den kundenseitigen Anlagen bei Freigabe in einen Vorlagebehälter gepumpt, dessen Füllstand überwacht wird. Gegebenenfalls kann diesem Vorlagebehälter ein Wasserstabilisator über eine Dosierpumpe zugegeben werden, wenn die letzte Zulaufmengen-Erhöhung eine Zeitspanne überschritten hat, ohne dass ein Abpumpen in einen Prozessbehälter erfolgte. Hierdurch soll erreicht werden, dass wenn der Vorlagebehälter längere Zeit nicht bearbeitet wird, dass durch Zugabe von Wasserstabilisator sich im Spülwasser im Vorlagebehälter keine Verkeimung bildet.

Wenn im Vorlagebehälter eine definierte Menge ansteht, wird über eine Pumpe und einen Filter der Prozessbehälter gefüllt. Hier wird über eine weitere Pumpe ein pH-Senker hinzugegeben, wobei beim Erreichen eines vorgegebenen pH-Werts, beispielsweise 5, eine Verweilzeit von beispielsweise 20 Min erforderlich ist, damit die Schwermetallionen-Hydroxide insbesondere Zinnhydroxid koagulieren. Diese Zeit ist notwendig, um die Niederschläge im Nachlauf mechanisch teilweise auszufiltern.

Im Anschluss werden die dann sauren Spülwässer dann Ionenaustauschersäulen zugeführt, die bereits im Stand der Technik bekannt sind.

Mit Hilfe der vorliegenden Erfindung ist es möglich, die Standzeit von Ionenaustauschern um ein Vielfaches, insbesondere um das 3 bis 15fache zu erhöhen.

## Patentansprüche

1. Verfahren zur Aufbereitung von alkalischen Spülwässern **aus der Leiterplattenherstellung, Leiterplattenfertigung und/oder der Bestückung** mit hohen Gehalten an gelöstem und/oder ungelöstem Zinn, **dadurch gekennzeichnet, dass** man die Spülwässer
(a) in einem ersten Schritt auf einen pH-Wert im Bereich von 4,5 bis 6,5 zur Fällung eines Zinnhydroxids **durch Zugabe einer anorganischen nicht oxidierenden Säure** einstellt,
(b) den gemäß Schritt (a) erhaltenen Zinnhydroxid-Niederschlag koagulieren lässt,
(c) das gemäß Schritt (b) gefällte Zinnhydroxid mit einer mechanischen Filterkaskade abtrennt und
(d) das Filtrat einem Ionenaustauschverfahren**mit einem Ionenaustauscher mit einer Cellulosematrix und fixierenden Gruppen** zur Eliminierung des Gesamtgehalts an Zinn von bis zu 2 mg/l unterzieht.

2. Verfahren nach Anspruch 1, **dadurch gekennzeichnet, dass** man den pH-Wert durch Zugabe **von** Phosphorsäure einstellt.

3. Verfahren nach **Anspruch** 2 , **dadurch gekennzeichnet, dass** man den pH-Wert im Bereich von 5,0 bis 6,0 einstellt.

4. Verfahren nach Anspruch 1, **dadurch gekennzeichnet, dass** man die Koagulation im Verlauf von bis zu 2h, insbesondere im Verlauf von bis zu 15 min, bevorzugt bei Raumtemperatur durchführt.

## Claims

1. A method for processing alkaline rinsing waters derived from the production, fabrication and/or onsertion of printed circuit boards and having high contents of dissolved and/or undissolved tin, **characterized in that** said rinsing waters
(a) are adjusted to a pH within a range of from 4.5 to 6.5 in a first step to precipitate a tin hydroxide by adding an inorganic non-oxidizing acid;
(b) the tin hydroxide precipitate obtained according to step (a) is allowed to coagulate;
(c) the tin hydroxide precipitated according to step (b) is separated off using a mechanical filter cascade; and
(d) the filtrate is subjected to an ion-exchange process using an ion exchanger having a cellulose matrix and fixing groups to eliminate the total tin content of up to 2 mg/l.

2. The method according to claim 1, **characterized in that** said adjusting of the pH is effected by adding phosphoric acid.

3. The method according to claim 2, **characterized in that** the pH is adjusted within a range of from 5.0 to 6.0.

4. The method according to claim 1, **characterized in that** said coagulation is performed in the course of up to 2 hours, especially in the course of up to 15 min, preferably at room temperature.

## Revendications

1. Procédé pour le traitement d'eaux de rinçage alcalines provenant de la production, fabrication et/ou implantation des cartes de circuits imprimés et ayant de hautes teneurs en étain dissout et/ou non dissout, **caractérisé en ce que** l'on
(a) ajuste lesdites eaux de rinçage à un valeur pH compris entre 4,5 et 6,5 dans une première étape pour précipiter un hydroxyde d'étain par addition d'un acide inorganique non oxydant ;
(b) laisse coaguler le précipité d'hydroxyde d'étain obtenu selon l'étape (a) ;
(c) sépare l'hydroxyde d'étain précipité selon l'étape (b) avec une cascade de filtres mécanique ; et
(d) soumet le filtrat à un procédé d'échange d'ions avec un échangeur d'ions comprenant une matrice de cellulose et des groupes fixants pour éliminer la teneur totale en étain de jusqu'à 2 mg/l.

2. Procédé selon la revendication 1, **caractérisé en ce que** l'on ajuste la valeur pH par addition d'acide phosphorique.

3. Procédé selon la revendication 2, **caractérisé en ce que** l'on ajuste la valeur pH dans l'intervalle de 5,0 à 6,0.

4. Procédé selon la revendication 1, **caractérisé en ce que** l'on effectue la coagulation au cours de jusqu'à 2 heures, notamment au cours de jusqu'à 15 minutes, de préférence à température ambiante.
